# EUROPÄISCHE PATENTSCHRIFT

(11) **EP 1 325 620 B1**
(45) Veröffentlichungstag und Bekanntmachung des Hinweises auf die Patenterteilung: **30.11.2005**
(21) Anmeldenummer: 01982162.8
(22) Anmeldetag: 25.09.2001
(51) Int. Cl.: H04M 11/06, H04Q 7/32

(54) **DATENUBERTRAGUNG UBER EINE FUNKSCHNITTSTELLE**
DATA TRANSMISSION VIA A RADIO INTERFACE BETWEEN AN ANALOG TELEPHONE LINK AND A DATA PROCESSING USER TERMINAL
TRANSMISSION DE DONNEES PAR L'INTERMEDIAIRE D'UNE INTERFACE ENTRE UNE LIAISON TELEPHONIQUE ANALOGIQUE ET UN POSTE D'ABONNE TRAITANT LES DONNEES

(30) Priorität: 10.10.2000 DE 10050042
(43) Veröffentlichungstag der Anmeldung: 09.07.2003
(73) Patentinhaber: Infineon Technologies AG, 81669 München (DE)
(72) Erfinder: HERTEL, Rolf, 67112 Mutterstadt (DE); KRANZ, Christian, 40885 Ratingen Lintorf (DE)
(74) Vertreter: Lange, Thomas
(86) Internationale Anmeldenummer: PCT/DE2001/003722
(87) Internationale Veröffentlichungsnummer: WO 2002/032085

(56) Entgegenhaltungen:
- WO-A-98/52368
- US-A- 5 862 474

## Beschreibung

Die Erfindung betrifft ein Verfahren, ein System und eine Vorrichtung zum Übertragen von Übertragungsdaten über eine Funkschnittstelle zwischen einer analogen Fernsprechverbindung und einer datenverarbeitenden Teilnehmereinrichtung, insbesondere zwischen einem öffentlichen Fernsprechnetz und einem Personal Computer (PC). Die Erfindung betrifft weiterhin die Verwendung eines Mittels zum Umwandeln analoger Signale einer analogen Fernsprechverbindung in digitale Signale und/oder umgekehrt.

Eine vielfach nachgefragte Applikation ist die schnurlose Übertragung von Übertragungsdaten, die von einer analogen Fernsprechverbindung empfangen werden und/oder über eine solche übertragen werden sollen. Häufig befindet sich in Wohnräumen oder Büroräumen ein Anschluß zu einem öffentlichen Fernsprechnetz, das dazu ausgelegt ist, Fernsprechsignale beispielsweise einer Frequenz zwischen 300 Hz und 3.400 Hz zu übertragen. Um auch Daten einer datenverarbeitenden Teilnehmereinrichtung, insbesondere eines PC über das öffentliche Fernsprechnetz übertragen zu können, werden üblicherweise sogenannte Modems (Modulator/Demodulator) eingesetzt. Ein Modem fügt den Übertragungsdaten Steuerinformation zum Steuern der Übertragung hinzu und wandelt die so entstandenen digitalen Signale in analoge Signale um, die über die analoge Fernsprechverbindung übertragen werden können. In Empfangsrichtung empfängt das Modem analoge Signale von der Fernsprechverbindung, wandelt diese in digitale Signale um, interpretiert die digitalen Signale und erhält somit die Übertragungsdaten. Es existieren zahlreiche verschiedene Verfahren der Umsetzung der Übertragungsdaten in die analogen Signale. Viele dieser Verfahren sind gemäß den Empfehlungen der ITU-T normiert. Im einfachsten Fall wird durch die Steuerinformation lediglich der Beginn und das Ende einer Datenübertragung signalisiert. Bei modernen Verfahren mit hohen Übertragungsraten werden die Übertragungsdaten jedoch auch komprimiert und es werden Bestätigungs- bzw. Fehlermeldungen als Steuerinformation übertragen. Insgesamt, und ohne Beschränkung auf einzelne dieser Verfahren, soll im folgenden die Vorbereitung der Übertragungsdaten zur Umwandlung der digitalen Signale in analoge Signale als Kodierung bezeichnet werden und die Gewinnung von Übertragungsdaten aus den digitalen Signalen als Dekodierung bezeichnet werden.

In heutiger Zeit sind schnurlose Telefone, d.h. Telefone, die ohne eine durchgehende Leitungsverbindung zwischen Hörer bzw. Mikrofon und dem Netzanschluß auskommen, weit verbreitet. Die Vorteile liegen auf der Hand: der Gesprächsteilnehmer kann sich während des Gesprächs weitgehend frei bewegen. Aber auch für datenverarbeitende Teilnehmereinrichtungen, zu denen hier auch ausschließlich datenspeichernde Einrichtungen gezählt werden, sind schnurlose Verbindungen zu einer analogen Fernsprechverbindung wünschenswert. Insbesondere kann so der Standort der Teilnehmereinrichtung verändert werden, ohne störende bewegliche Leitungsverbindungen zu verwenden oder neue Leitungsverbindungen verlegen zu müssen.

Um Daten von oder zu der Teilnehmereinrichtung über eine Luftschnittstelle übertragen zu können, ist es bekannt, eine Leitungsverbindung zur Übertragung der Daten zu bzw. von einem Modem aufzutrennen und eine Sende- und Empfangseinrichtung zur Funkübertragung von Datensignalen einzusetzen. Die Sende- und Empfangseinrichtung weist beidseits der Funkschnittstelle jeweils ein Sende- und Empfangsgerät auf. Eine derartige Sende- und Empfangseinrichtung ist beispielsweise das Gigaset M101 der Firma Siemens. Diese Lösung bietet zwar den gewünschten Komfort einer schnurlosen Übertragung zu bzw. von dem Modem, erfordert jedoch wie beschrieben mindestens zwei Funkgeräte. Weiterhin müssen derartige Lösungen entweder speziell und ausschließlich für eine bestimmte Datenübertragungsrate ausgelegt sein oder dafür eingerichtet sein, sich an unterschiedlich schnelle Datenübertragungen anzupassen. Nachdem moderne Modems in der Lage sind, die Übertragungsgeschwindigkeit während der Datenübertragung zu verändern, ist eine leistungsfähige Sende- und Empfangseinrichtung dieser Art verhältnismäßig komplex in seiner Funktionsweise.

Weiterhin ist vorgeschlagen worden, einen Modem in eine herkömmliche Basisstation eines Funktelefons zu integrieren. Auch hier befindet sich der Modem auf der von der datenverarbeitenden Teilnehmereinrichtung aus gesehen gegenüberliegenden Seite der Funkschnittstelle. Das auf derselben Seite wie der Modem gelegene Funkgerät muß daher ebenfalls verhältnismäßig komplexe Funktionen ausführen können, um sich an unterschiedliche Datenübertragungsraten anpassen zu können.

Ferner ist es bekannt, den Modem an derselben Seite der Funkschnittstelle wie die datenverarbeitende Teilnehmereinrichtung anzuordnen. Von einer analogen Fernsprechverbindung kommende analoge Signale werden hierbei zunächst in digitale Signale umgewandelt, die digitalen Signale über die Funkschnittstelle übertragen, anschließend wieder in analoge Signale umgewandelt und dem Modem zugeführt. Wird dabei nach einer ADPCM (Adaptive Differenzpulscodemodulation)-Methode gearbeitet, ist die Datenübertragungsrate auf maximal 9.600 Bit/s beschränkt. Bei einer PCM (Pulscodemodulation), bei der die Funkübertragung mit einer Bitrate von 64 kBit/s stattfindet, ist die eigentliche Datenrate auf maximal 28,8 kBit/s beschränkt. Selbst diese Datenrate wird jedoch bei bekannten Ausführungsformen nicht erreicht, da auf der Funkschnittstellenseite des Modems in Signalflußrichtung nacheinander zunächst eine Digital/Analog-Wandlung und dann eine Analog/Digital-Wandlung der Signale ausgeführt wird, verbunden mit einer Umsetzung der Signale von einer vieradrigen Signalführung auf eine zweiadrige und wieder auf eine vieradrige. Diese Umwandlung bzw. Umsetzung beschränkt die Datenrate. Ferner sind entsprechend viele, speziell für diese Daten-Funkübertragung ausgelegte Wandler erforderlich.

In der den nächstliegenden Stand der Technik bildenden Schrift WO 98/52368 ist ein System bestehend aus einer datenverarbeitenden Endeinrichtung, einem Modem und einer analogen Fernsprechverbindung beschrieben, welches eine Funkschnittstelle aufweist. Der Wandler befindet sich hier in einem Modem, welcher in einem zentralen Basisstation-Controller angeordnet ist. Der Wandler wird sowohl in Empfangs- als auch in Senderichtung nur dann eingesetzt, wenn Faxsignale gewandelt werden müssen.

In der Schrift US 5,862,474 ist ein System bestehend aus einem Computer, einem Modem, einer Funkschnittstelle und einer an ein analoges Telefonnetz angebundenen Basisstation beschrieben. Angaben hinsichtlich des Aufbaus der Basisstation sind der Schrift nicht zu entnehmen.

Der vorliegenden Erfindung liegt die Aufgabe zugrunde, ein Verfahren und ein System zum Übertragen von Übertragungsdaten über eine Funkschnittstelle der eingangs genannten Art anzugeben, die bzw. das eine leistungsfähige und an unterschiedliche Datenraten sowie an verschiedene Übertragungsnormen anpaßbare Funkübertragung der Übertragungsdaten ermöglicht. Dabei soll eine Ausführung des Verfahrens bzw. sollen Ausführungsformen des Systems einen möglichst geringen zusätzlichen entwicklungstechnischen Aufwand erfordern bzw. nach sich ziehen. Eine weitere Aufgabe der Erfindung ist es, eine dementsprechende Verwendung eines Mittels anzugeben.

Die Aufgaben werden durch ein Verfahren mit den Merkmalen des Patentanspruchs 1, ein System mit den Merkmalen des Patentanspruchs 6 und eine Verwendung mit den Merkmalen des Patentanspruchs 8 gelöst. Weiterbildungen sind Gegenstand der abhängigen Ansprüche.

Bei dem erfindungsgemäßen Verfahren werden demnach den Übertragungsdaten entsprechende analoge Signale von der analogen Fernsprechverbindung empfangen (Empfangsrichtung), in digitale Signale umgewandelt und durch Dekodierung der Signale die Übertragungsdaten erhalten. Zusätzlich werden aus den Übertragungsdaten entsprechende kodierte digitale Signale erzeugt, die digitalen Signale in analoge Signale umgewandelt und an die analoge Fernsprechverbindung abgegeben (Senderichtung). Ein wesentlicher Gedanke besteht darin, daß zur Umwandlung der analogen Signale in die digitalen Signale und umgekehrt ein auch zur Umwandlung von Fernsprechsignalen verwendbarer Wandler in einer Basisstation für ein Funktelefon verwendet wird und daß die digitalen Signale über die Funkschnittstelle übertragen werden und die Dekodierung und Kodierung auf der von der Basisstation ausgesehen anderen Seite der Funkschnittstelle vorgenommen wird. Im Unterschied zu vorbekannten Lösungen ist kein klassischer Modem erforderlich, der entweder auf der einen oder der anderen Seite der Funkschnittstelle angeordnet ist. Vielmehr werden die entsprechenden Funktionen beidseits der Funkschnittstelle ausgeführt. Dies erlaubt einerseits eine leistungsfähige Übertragung der Daten, da digitale Signale ohne zusätzlich erforderliche A/D-Wandlungen über die Funkschnittstelle übertragbar sind. Nachdem die Dekodierung bzw. Kodierung der digitalen Signale auf der Endgeräteseite der Funkschnittstelle.erfolgt, besteht keine Notwendigkeit für besondere Maßnahmen, die die Funkübertragung an wechselnde Übertragungsraten der Übertragungsdaten anpassen. Die Funkübertragung muß nur in der Lage sein, bei der maximal möglichen Übertragungsrate zu funktionieren. Insbesondere kann auf vorbekannte Methoden zur Funkübertragung wie die genannten ADPCM- oder PCM-Methoden verzichtet werden. Ein weiterer wesentlicher Vorteil der Erfindung besteht darin, daß der Wandler einer herkömmlichen Basisstation für ein Funktelefon verwendet wird. Damit braucht beim Vorhandensein einer solchen Basisstation lediglich noch die von der Basisstation aus gesehen gegenüberliegende Seite der Funkschnittstelle angeschafft zu werden. Es ist sogar möglich, Basisstationen von schnurlosen Telefonen ohne jegliche Änderung oder Anpassung zu verwenden. Es wird jedoch bevorzugt, Basisstationen so auszustatten oder zu verändern, daß heutige Spitzenwerte von Datenübertragungsraten erreichbar sind.

Beispielsweise bei DECT-Systemen sind die Wandler der Basisstationen zumindest in der Lage, bei einer Abtastrate von 8 kHz die von der analogen Fernsprechverbindung empfangenen Signale abzutasten und beispielsweise bei einer Auflösung von 15 oder 16 Bit in digitale Signale umzuwandeln. Es wird bevorzugt, die Abtastung mit einer Abtastrate von mehr als 8 kHz vorzunehmen, insbesondere etwa 16 kHz. Einige auf dem Markt erhältliche Geräte sind bereits dazu in der Lage. Derartig hohe Abtastraten erlauben es, Übertragungsraten zu realisieren, die heutigen modernen Modemverfahren entsprechen, etwa der ITU-T-Empfehlung V.90.

Eine Weiterbildung des erfindungsgemäßen Verfahrens betrifft die Funkübertragung der digitalen Signale nach einem TDMA-Duplexverfahren. Es wird vorgeschlagen, zur Funkübertragung der Signale in die eine Richtung mehr Zeitschlitze eines TDMA-Rahmens zu nutzen als in die Gegenrichtung. Dies ermöglicht, das Funksystem nur soweit zu belasten, wie es unbedingt erforderlich ist, wenn wie bei einigen Modem-Übertragungsnormen in der einen Richtung höhere Übertragungsraten erreicht werden als in der Gegenrichtung.

Eine weitere Ausgestaltung der Erfindung betrifft ebenfalls TDMA-Duplexverfahren. Hierbei werden aufeinander folgende Zeitschlitze und/oder Gruppen von Zeitschlitzen eines TDMA-Rahmens abwechselnd zur Funkübertragung der Signale in die eine Richtung und der Signale in die Gegenrichtung genutzt. Wechseln die Zeitschlitze für die eine Richtung und für die Gegenrichtung häufiger als einmal in dem TDMA-Rahmen ab, so können die Totzeiten, während denen keine Datenübertragung in jeweils eine Richtung stattfindet, reduziert werden. Die Signalverarbeitungseinheiten beidseits der Funkschnittstelle können somit kontinuierlicher und effektiver arbeiten.

Noch eine Weiterbildung des Verfahrens betrifft die Funkübertragung der digitalen Signale nach dem DECT (Digital Enhanced Cordless Telecommunication)-Standard. Dabei wird zumindest ein Teil der Zeitschlitze zu einer oder mehreren Gruppen aufeinander folgender Zeitschlitze zusammengefaßt. Dies ermöglicht die Reduzierung des Anteils der Steuerinformation zur Steuerung der DECT-Funkübertragung pro Zeitschlitz.

Das erfindungsgemäße System zum Übertragen von Übertragungsdaten über eine Funkschnittstelle der eingangs genannten Art weist gemäß Anspruch 6 einen Wandler zum Umwandeln von den Übertragungsdaten entsprechenden analogen Signalen, die von der analogen Fernsprechverbindung empfangen werden, in digitale Signale und zum Umwandeln von den Übertragungsdaten entsprechenden digitalen Signalen in analoge Signale, die an die Fernsprechverbindung abgegeben werden, auf. Weiterhin ist ein Signalprozessor vorhanden, zum Erzeugen der digitalen Signale durch Kodieren derselben aus den Übertragungsdaten und zum Gewinnen der Übertragungsdaten durch Dekodieren der digitalen Signale. Ferner weist das System eine Sende- und Empfangseinrichtung zur Funkübertragung über die Funkschnittstelle auf. Gemäß einem wesentlichen Gedanken der Erfindung ist der Wandler Teil einer Basisstation für ein Funktelefon und wird auch zur Wandlung von Fernspechsignalen eingesetzt, weist die Basisstation einen ersten Teil der Sende- und Empfangseinrichtung auf und ist jenseits der Funkschnittstelle ein zweiter Teil der Sende- und Empfangseinrichtung angeordnet, der zur Übertragung der digitalen Signale mit dem Signalprozessor verbunden ist.

Eine Vorrichtung zum Übertragen von Übertragungsdaten der eingangs genannten Art weist einen Signalprozessor auf, zum Erzeugen digitaler Signale aus den Übertragungsdaten und zum Gewinnen der Übertragungsdaten aus digitalen Signalen, und weist ferner eine Steuereinrichtung zum Steuern des Betriebes des Signalprozessors auf. Es ist ein Anschluß zum Empfangen bzw. Ausgeben der digitalen Signale vorgesehen, wobei die digitalen Signale Steuerinformation zum Steuern einer Funkübertragung der digitalen Signale über die Funkschnittstelle aufweisen. Die Steuereinrichtung steuert den Signalprozessor derart, daß die digitalen Signale außerdem Steuerinformation zum Steuern einer Übertragung der in den digitalen Signalen enthaltenen Übertragungsdaten in Form von analogen Signalen über die analoge Fernsprechverbindung enthalten (Senderichtung) bzw. derartige Steuerinformation in den emp-fangenen digitalen Signalen ausgewertet wird und die Übertragungsdaten gewonnen werden (Empfangsrichtung).

Dabei weist der Signalprozessor eine Einheit auf, in der sowohl die Steuerinformation zum Steuern der Funkübertragung als auch die Steuerinformation zum Steuern der Übertragung über die analoge Fernsprechverbindung hinzugefügt bzw. ausgewertet werden. Beispielsweise ein moderner digitaler Signalprozessor (DSP) ist in der Lage, beide Aufgaben für die Empfangsrichtung und/oder Senderichtung zu übernehmen. Damit können Entwicklungs- und Hardwarekosten eingespart werden.

Die Erfindung wird nun anhand von Ausführungsbeispielen näher erläutert. Dabei wird Bezug auf die beigefügte Zeichnung genommen. Die Erfindung ist jedoch nicht auf die Ausführungsbeispiele beschränkt. In der Zeichnung zeigt die einzige Figur:

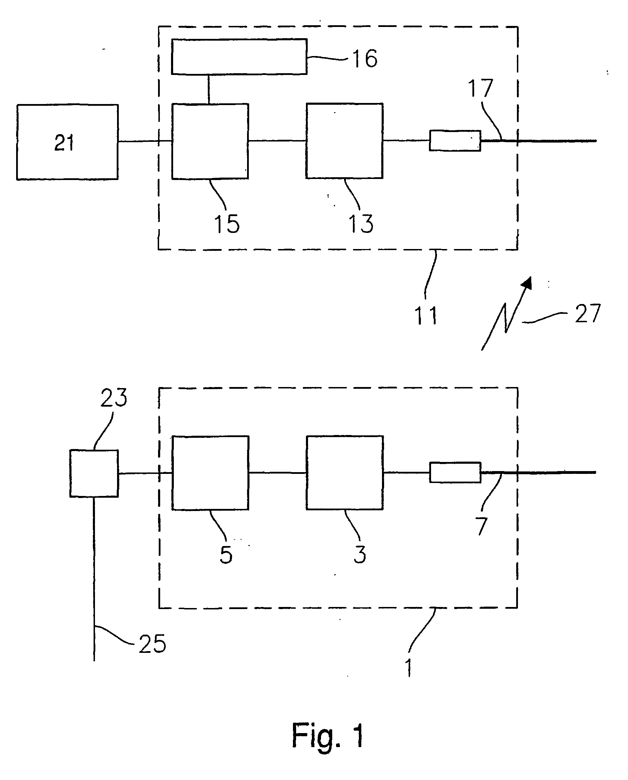

- Fig. 1: ein Ausführungsbeispiel für ein System zum Übertragen von Übertragungsdaten über eine Funkschnittstelle, das auf einer Seite der Funkschnittstelle an ein öffentliches Fernsprechnetz angeschlossen ist und auf der anderen Seite der Funkschnittstelle an einen PC angeschlossen ist.

Die Darstellung in Fig. 1 ist schematisch zu verstehen und zeigt nur für die Erfindung bedeutende Bauteile. Weitere Bauteile und Funktionen können vorgesehen sein.

Fig. 1 zeigt eine Fernsprechverbindung 25 zu einem öffentlichen Fernsprechnetz, die beispielsweise durch eine zweiadrige festverlegte Leitung realisiert ist. Mit einem Netzabschluß 23 ist eine Basisstation 1 verbunden. Die Basisstation 1 weist einen Wandler 5 zum Umwandeln der von dem öffentlichen Fernsprechnetz empfangenen analogen Signale in digitale Signale auf. Ferner dient der Wandler 5 zum Umwandeln digitaler Signale in analoge Signale, die über den Netzabschluß 23 an das öffentliche Fernsprechnetz abgegeben werden. Der Wandler 5 ist insbesondere ein σ-δ-Wandler, der in der Lage ist, in Empfangsrichtung analoge Signale mit einer Abtastfrequenz von 16 kHz bei einer Auflösung von 15 oder 16 Bit abzutasten. Dies bedeutet für die Empfangsrichtung eine Datenrate von 240 oder 256 kBit/s der resultierenden digitalen Signale.

Die Basisstation 1 weist ferner ein Hochfrequenzteil (HF-Teil) 3 auf, welches die von dem Wandler 5 empfangenen digitalen Signale aus dem Basisband in ein Hochfrequenzsignal umwandelt und an die Antenneneinrichtung 7 der Basisstation 1 abgibt. Weiterhin erhält das HF-Teil 3 Hochfrequenzsignale von der Antenneneinrichtung 7 und versetzt diese ins Basisband.

Die Antenneneinrichtung 7 definiert eine Seite einer Funkschnittstelle 27, über die Hochfrequenzsignale zu einer Antenneneinrichtung 17 übertragen werden können bzw. von dieser Hochfrequenzsignale empfangen werden können. Die Antenneneinrichtung 17 ist Bestandteil einer Mobilstation 11, in der die Hochfrequenzsignale weiter verarbeitet werden. Die Mobilstation 11 muß nicht jederzeit bewegbar sein, sondern kann beispielsweise auch fest installiert werden. Sie ist jedoch insofern mobil, als sie zumindest einmal an eine nahezu beliebige Stelle im Sendebereich der Basisstation 1 bewegt werden kann. Vorzugsweise ist die Mobilstation 11 jedoch ein kompaktes bewegliches Gerät, welches beispielsweise über eine nach dem V.24-Standard betriebene Datenleitung oder über eine USB-Schnittstelle an eine datenverarbeitende Teilnehmereinrichtung angeschlossen werden kann. Im Ausführungsbeispiel von Fig. 1 ist diese Teilnehmereinrichtung ein Personal Computer (PC) 21.

Die Mobilstation 11 weist ein HF-Teil 13 auf, das entsprechend dem HF-Teil 3 die Umwandlung von Hochfrequenzsignalen in Basisbandsignale bzw. umgekehrt übernimmt. Das HF-Teil 13 ist mit einem digitalen Signalprozessor (DSP) 15 verbunden, in dem eine Verarbeitung der digitalen Signale im Basisband erfolgt und aus den digitalen Signalen die eigentlichen Übertragungsdaten gewonnen werden. Die Übertragungsdaten werden dann an den PC 21 abgegeben. Umgekehrt wandelt der DSP 15 von dem PC 21 empfangene Übertragungsdaten in geeignete digitale Signale um und gibt diese dann an das HF-Teil 13 ab.

Die Mobilstation 11 kann auch, beispielsweise als Einsteckkarte, in den PC 21 integriert sein. In diesem Fall stellt die Leitungsverbindung zwischen dem PC 21 und der Mobilstation 11 z.B. einen Teil eines internen Datenbusses des PC 21 dar.

Weiterhin weist die Mobilstation 11 eine Steuerung 16 auf, die den Betrieb des DSP 15 steuert.

Im folgenden wird nun beispielhaft die Funktion des in Fig. 1 dargestellten Systems beschrieben:

Die Basisstation 1 ist eine nach dem DECT-Standard arbeitende Basisstation, die auch zum Betrieb eines schnurlosen Telefons nutzbar ist. Dementsprechend ist auch die Mobilstation 11 dazu ausgelegt, Signale gemäß dem DECT-Standard zu verarbeiten. Bei den HF-Teilen 3, 13, handelt es sich z.B. um sogenannte Slow-Hopping HF-Teile, bei denen von jeweils zwölf Sende- und Empfangszeitschlitzen eines TDMA-Rahmens jeweils sechs zum Einschwingen von in den HF-Teilen 3, 13 enthaltenden Synthesizern benötigt werden. Es stehen daher in Sende- und Empfangsrichtung jeweils nur sechs Zeitschlitze pro TDMA-Rahmen zur Verfügung.

Es soll nun eine Datenübertragung von dem PC 21 über die analoge Fernsprechverbindung 25 zu einer entfernten datenverarbeitenden Einrichtung durchgeführt werden. Während dieser Verbindung sollen auch Übertragungsdaten von der entfernten Einrichtung zu dem PC 21 übertragen werden. Die Steuerung 16 ist in der Lage, den Betrieb der Mobilstation 11 so zu steuern, wie die Steuerung eines herkömmlichen Modems, welches in der Lage ist, nach der ITU-T-Empfehlung V.90 zu arbeiten. Ist auch die entfernte datenverarbeitende Einrichtung mit einer gemäß dieser Empfehlung arbeitenden Übertragungseinrichtung ausgestattet, steuert die Steuerung 16 den Betrieb des DSP 15 derart, daß die an das HF-Teil abgegebenen digitalen Signale entsprechend komprimiert und mit entsprechender Steuerinformation versehen sind bzw. daß die von dem HF-Teil 13 empfangenen digitalen Signale richtig interpretiert werden. Ferner obliegt der Steuerung 16 das Steuern zusätzlicher Funktionen wie beispielsweise Echo-Kompensation und Korrektur der Fehler der übertragenden Signale. Hierzu können zusätzliche, nicht dargestellte Bauteile in der Mobilstation 11 vorgesehen sein, beispielsweise Datenspeicher, die mit dem DSP 15 und/oder der Steuerung 16 zusammenwirken.

Gemäß der V.90-Empfehlung werden in Empfangsrichtung, d.h. von der Fernsprechverbindung 25 kommend in Richtung des DSP 15 Datenübertragungsraten der eigentlichen zu übertragenden Daten von bis zu 56 kBit/s erreicht, in Senderichtung dagegen nur deutlich geringere Datenraten. Dem entspricht bei den zwischen dem DSP 15 und dem Wandler 5 übertragenden digitalen Signalen eine Datenrate von 240 kBit/s in Empfangsrichtung bzw. 120 kBit/s in Senderichtung. Diese Datenrate ist größer als die eigentliche Datenübertragungsrate, da in Empfangsrichtung eine ausreichende Abtastinformation der von dem Wandler 5 empfangenen analogen Signale in den digitalen Signalen enthalten sein muß und da in Senderichtung eine ausreichende Information für den Wandler 5 zur Umwandlung in analoge Signale vorhanden sein muß. Auf der Übertragungsstrecke zwischen der Basisstation 1 und der Mobilstation 11 kommt ferner noch Steuerinformation zur Steuerung der Funkübertragung hinzu.

Um die digitalen Signale in Empfangsrichtung mit 240 kBit/s übertragen zu können, werden die für die Empfangsrichtung zur Verfügung stehenden sechs Zeitschlitze eines TDMA-Rahmen zu drei Doppelzeitschlitzen zusammengefaßt, wobei jeder Doppelzeitschlitz aus zwei unmittelbar aufeinander folgenden Zeitschlitzen besteht. Zwischen den Doppelzeitschlitzen stehen ausreichend weitere Zeitschlitze zum Einschwingen der Synthesizer zur Verfügung. Durch die Zusammenfassung der Zeitschlitze kann der Anteil an DECT-Steuerinformation pro jeweils zwei Zeitschlitze reduziert werden, so daß zu der Übertragung der digitalen Signale bezogen auf den einzelnen Zeitschlitz 400 Bit statt 320 Bit Übertragungskapazität zur Verfügung stehen. Da die zeitliche Länge eines TDMA-Rahmens 10 ms beträgt, lassen sich auf diese Weise die gewünschten 240 kBit/s übertragen. Dies bedeutet, daß bei der oben beschriebenen Abtastung der analogen Signale mit einer Abtastrate von 16 kHz bei einer Auflösung von 15 Bit genau die volle Abtastinformation, die den digitalen Signalen entspricht, in den drei Doppelzeitschlitzen pro TDMA-Rahmen übertragen werden kann.

Die Basisstation verhält sich daher nicht anders als bei üblichen Funkübertragungen gemäß dem DECT-Standard, mit Ausnahme davon, daß die Abtastinformation in Doppelzeitschlitze kopiert werden muß und die genannte hohe Abtastrate vorliegen muß. Bei bereits auf dem Markt befindlichen Geräten, die mit ausreichender Abtastrate arbeiten, müssen keine Veränderungen der Hardware vorgenommen werden. Das Übertragungsverfahren kann allein durch eine Veränderung der Steuerung der Geräte, beispielsweise durch Aktualisieren von Software in den Geräten, realisiert werden.

In Senderichtung empfängt die Mobilstation 11 die so übertragene Abtastinformation und außerdem die in denselben Zeitschlitzen enthaltene DECT-Steuerinformation. Die Steuerung 16 und der DSP 15 wirken dabei derart zusammen, daß der DSP 15 sowohl die DECT-Steuerinformation verarbeitet, als auch aus der Abtastinformation die eigentlichen Übertragungsdaten gewinnt. Umgekehrt steuert die Steuerung 16 den DSP 15 in Senderichtung derart an, daß der DSP 15 die eigentlichen Übertragungsdaten gemäß der angewendeten ITU-T-Empfehlung in digitale Signale umwandelt und außerdem die DECT-Steuerinformation hinzufügt. Beispielsweise durch Nutzung von Datenspeichern kann der DSP 15, etwa im Multitasking-Betrieb, all diese genannten Aufgaben übernehmen.

Bei einer vorteilhaften Variante des DECT-Verfahrens wird die strenge Unterteilung eines TDMA-Rahmens in 12 aufeinander folgende Zeitschlitze für die Empfangsrichtung und daran anschließend zwölf aufeinander folgende Zeitschlitze für die Senderichtung aufgegeben. Werden beispielsweise wie oben für eine Modem-Übertragung gemäß der V.90-Empfehlung mindestens 240 kBit/s für die digitalen Signale benötigt, werden vorzugsweise acht einzelne Zeitschlitze für die Empfangsrichtung und vier einzelne Zeitschlitze für die Senderichtung genutzt. Bei der Aufteilung stehen außerdem für beide Richtungen noch ausreichend Zeitschlitze zum Einschwingen der Synthesizer von Slow-Hopping HF-Teilen zur Verfügung und kann außerdem auf die Zusammenfassung einzelner Zeitschlitze zu Gruppen aufeinander folgender Zeitschlitze verzichtet werden. Die digitalen Signale können in Empfangsrichtung sogar mit einer Datenrate von 256 kBit/s übertragen werden, so daß bei einer Abtastrate von 16 kHz des Wandlers 5 mit einer Auflösung von 16 Bit gearbeitet werden kann.

Bei einer weiteren Variante, insbesondere bei Verwendung von Fast-Hopping-HF-Teilen, wechseln sich innerhalb eines TDMA-Rahmens Zeitschlitze für die Sende- und die Empfangsrichtung mehrfach ab. Dies erlaubt eine Reduzierung der Totzeit, d.h. der Zeit, während der in eine Übertragungsrichtung keine Information übertragen werden kann, da während dieser Zeit Information in die andere Richtung übertragen wird (TDMA-Duplexverfahren). Dadurch kann, insbesondere beim Auftreten von Störungen, schneller reagiert werden und beispielsweise fehlerhaft empfangene Information erneut übertragen werden. Vor allem beim Modembetrieb kann so eine insgesamt schnellere Datenübertragung realisiert werden bzw. schneller zu einer angemessenen Übertragungsgeschwindigkeit der Daten gewechselt werden.

Zusammenfassend kann festgestellt werden, daß durch die Erfindung die Realisierung einer Datenübertragung über eine Funkschnittstelle zwischen einer analogen Fernsprechverbindung und einer datenverarbeitenden Teilnehmereinrichtung besonders kostengünstig ist. An einer bereits vorhandenen Basisstation für ein schnurloses Telefon müssen allenfalls geringfügige Änderungen vorgenommen werden. Weiterhin können Basisstationen in Massenproduktion hergestellt werden, die gleichermaßen für den Betrieb von schnurlosen Telefonen, anderen schnurlosen Übertragungssystemen und für die erfindungsgemäße Art der Funkübertragung von Daten geeignet sind. Ferner können bei modernen Basisstation hohe Datenübertragungsraten erreicht werden, die aktuellen ITU-T-Empfehlungen entsprechen.

## Patentansprüche

1. Verfahren zum Übertragen von Übertragungsdaten zwischen einer analogen Fernsprechverbindung (25) und einer datenverarbeitenden Teilnehmereinrichtung (21) über eine mit der Fernsprechverbindung (25) in Verbindung stehende Basisstation (1) für ein Schnurlos-Telefon, eine mit der Teilnehmereinrichtung (21) gekoppelte Mobilstation (11) und der zwischen der Basisstation (1) und der Mobilstation (11) verwendeten Funkschnittstelle für das Schnurlos-Telefon,
**gekennzeichnet durch** die Schritte:
- Empfangen von den Übertragungsdaten entsprechenden analogen Signalen von der analogen Fernsprechverbindung (25);
- Umwandeln der analogen Signale in digitale Signale mittels eines in der Basisstation (1) vorgesehenen Wandlers (5), der auch zur Wandlung von Fernsprechsignalen zu deren Übertragung über die Funkschnittstelle (27) zum schnurlosen Telefon vorgesehen ist;
- Übertragen der digitalen Signale über die Funkschnittstelle (27); und
- Dekodieren der digitalen Signale mittels eines Signalprozessors (15) in der Mobilstation (11), wodurch die Übertragungsdaten erhalten werden; sowie
**durch** die für die Übertragung in Gegenrichtung durchgeführten Schritte:
- Erzeugen von kodierten digitalen Signalen aus den Übertragungsdaten mittels des Signalprozessors (15);
- Übertragen der digitalen Signale über die Funkschnittstelle (27) ;
- Umwandeln der digitalen Signale in analoge Signale mittels des Wandlers (5); und
- Abgeben der analogen Signale an die analoge Fernsprechverbindung (25).

2. Verfahren nach Anspruch 1,
wobei die datenverarbeitende Teilnehmereinrichtung ein PC (21) ist.

3. Verfahren nach Anspruch 1 oder 2, wobei die Signale nach einem TDMA-Duplexverfahren über die Funkschnittstelle (27) übertragen werden, wobei zur Funkübertragung der Signale in die eine Richtung mehr Zeitschlitze eines TDMA-Rahmens genutzt werden als in die Gegenrichtung.

4. Verfahren nach einem der vorhergehenden Ansprüche, wobei die digitalen Signale nach einem TDMA-Duplexverfahren über die Funkschnittstelle (27) übertragen werden, wobei aufeinander folgende Zeitschlitze und/oder Gruppen von Zeitschlitzen eines TDMA-Rahmens abwechselnd zur Funkübertragung der Signale in die eine Richtung und der Signale in die Gegenrichtung genutzt werden.

5. Verfahren nach einem der vorhergehenden Ansprüche, wobei die Funkübertragung der digitalen Signale nach dem DECT (Digital Enhanced Cordless Telecommunication)-Standard vorgenommen wird, wobei jedoch zumindest ein Teil der Zeitschlitze zu einer oder mehreren Gruppen aufeinander folgender Zeitschlitze zusammengefaßt wird.

6. System zum Übertragen von Übertragungsdaten zwischen einer analogen Fernsprechverbindung (25) und einer datenverarbeitenden Teilnehmereinrichtung (21), das eine mit der Fernsprechverbindung (25) in Verbindung stehende Basisstation (1) für ein Schnurlos-Telefon und eine über die Funkschnittstelle (27) zwischen der Basisstation (1) und dem Schnurlos-Telefon mit der Basisstation (1) in Funkverbindung stehende Mobilstation (11) aufweist, welche mit der Teilnehmereinrichtung (21) verbunden ist,
**dadurch gekennzeichnet, daß**
- die Basisstation (1) einen ersten Teil (3) einer Sende- und Empfangseinrichtung (3, 7, 13, 17) zur Funkübertragung über die Funkschnittstelle (27) und einen Wandler (5) zum Umwandeln von den Übertragungsdaten entsprechenden analogen Signalen, die von der analogen Fernsprechverbindung (25) emp-fangen werden, in digitale Signale und zum Umwandeln von den Übertragungsdaten entsprechenden digitalen Signalen in analoge Signale, die an die Fernsprechverbindung (25) abgegeben werden, aufweist, welcher Wandler (5) derjenige ist, der auch zur Wandlung von Fernsprechsignalen zu deren Übertragung über die Funkschnittstelle (27) zum schnurlosen Telefon vorgesehen ist, und
- die Mobilstation (11) einen zweiten Teil (13) der Sende- und Empfangseinrichtung (3, 7, 13, 17) und einen mit dem zweiten Teil (13) der Sende- und Empfangseinrichtung (3, 7, 13, 17) verbundenen Signalprozessor (15) zum Erzeugen der digitalen Signale durch Kodieren derselben aus den Übertragungsdaten und zum Gewinnen der Übertragungsdaten durch Dekodieren der digitalen Signale aufweist.

7. System nach Anspruch 6,
wobei die datenverarbeitende Teilnehmereinrichtung ein PC (21) ist.

8. Verwendung einer Basisstation (1) für ein Schnurlos-Telefon zum Übertragen von Übertragungsdaten zwischen einer analogen Fernsprechverbindung (25) und einer datenverarbeitenden Teilnehmereinrichtung (21), wobei die Basisstation (1) mit der Fernsprechverbindung (25) in Verbindung steht und einen Wandler (5) zum Umwandeln analoger Signale der analogen Fernsprechverbindung in digitale Signale und umgekehrt aufweist, wobei eine über die Funkschnittstelle (27) zwischen Basisstation (1) und dem Schnurlos-Telefon mit der Basisstation (1) in Funkverbindung stehende Mobilstation (11) mit der Teilnehmereinrichtung (21) verbunden ist,
**dadurch gekennzeichnet, daß**
- die Basisstation (1) einen ersten Teil (3) einer Sende- und Empfangseinrichtung (3, 7, 13, 17) zur Funkübertragung über die Funkschnittstelle (27) und einen Wandler (5) zum Umwandeln von den Übertragungsdaten entsprechenden analogen Signalen, die von der analogen Fernsprechverbindung (25) empfangen werden, in digitale Signale und zum Umwandeln von den Übertragungsdaten entsprechenden digitalen Signalen in analoge Signale, die an die Fernsprechverbindung (25) abgegeben werden, aufweist, welcher Wandler (5) derjenige ist, der auch zur Wandlung von Fernsprechsignalen zu deren Übertragung über die Funkschnittstelle (27) zum schnurlosen Telefon vorgesehen ist, und
- die Mobilstation (11) einen zweiten Teil (13) der Sende- und Empfangseinrichtung (3, 7, 13, 17) und einen mit dem zweiten Teil (13) der Sende- und Empfangseinrichtung (3, 7, 13, 17) verbundenen Signalprozessor (15) zum Erzeugen der digitalen Signale durch Kodieren derselben aus den Übertragungsdaten und zum Gewinnen der Übertragungsdaten durch Dekodieren der digitalen Signale aufweist.

9. Verwendung nach Anspruch 8,
wobei der Wandler (5) der Basisstation (1), durch den die Signale umgewandelt werden, bei einer Abtastrate von mehr als 8 kHz, insbesondere etwa 16 kHz, die von der analogen Fernsprechverbindung (25) empfangenen Signale abtastet und in die digitalen Signale umwandelt.

## Claims

1. Method for transmitting transmission data between an analog telephone link (25) and a data-processing user apparatus (21), by means of a base station (1), connected to the telephone link (25), for a cordless telephone, a mobile station (11) coupled to the user apparatus (21) and the radio interface, used between the base station (1) and the mobile station (11), for the cordless telephone, **characterized by** the steps:
- analog signals which correspond to the transmission data are received by the analog telephone link (25);
- the analog signals are converted into digital signals by means of a converter (5) which is provided in the base station (1) and which is also provided for converting telephone signals for their transmission via the radio interface (27) to the cordless telephone;
- the digital signals are transmitted via the radio interface (27); and
- the digital signals are decoded by means of a signal processor (15) in the mobile station (11), as a result of which the transmission data is obtained; and
by the steps carried out for the transmission in the opposite direction:
- encoded digital signals are generated from the transmission data by means of the signal processor (15);
- the digital signals are transmitted via the radio interface (27);
- the digital signals are converted into analog signals by means of the converter (5); and
- the analog signals are output to the analog telephone link (25).

2. Method according to Claim 1, the data-processing user apparatus being a PC (21).

3. Method according to Claim 1 or 2, in which the signals are transmitted via the radio interface (27) according to a TDMA duplex method, more time slots of a TDMA frame being used for the radio transmission of the signals in one direction than in the opposite direction.

4. Method according to one of the preceding claims, in which the digital signals are transmitted via the radio interface (27) according to a TDMA duplex method, successive time slots and/or groups of time slots of a TDMA frame being alternately used for the radio transmission of the signals in one direction and of the signals in the opposite direction.

5. Method according to one of the preceding claims, in which the radio transmission of the digital signals is performed according to the DECT (Digital Enhanced Cordless Telecommunication) standard, at least some of the time slots being however combined to form one or more groups of successive time slots.

6. System for transmitting transmission data between an analog telephone link (25) and a data-processing user apparatus (21) which has a base station (1), connected to the telephone link (25), for a cordless telephone and a mobile station (11) which has a radio connection to the base station (1) via the radio interface (27) between the base station (1) and the cordless telephone and is connected to the user apparatus (21), **characterized in that**
- the base station (1) has a first part (3) of a transceiver apparatus (3, 7, 13, 17) for the radio transmission via the interface (27) and a converter (5) for converting analog signals which correspond to the transmission data and are received from the analog telephone link (25) into digital signals, and for converting digital signals which correspond to the transmission data into analog signals which are output to the telephone link (25), which converter (5) is the one which is also provided for converting telephone signals for their transmission via the radio interface (27) to the cordless telephone, and
- the mobile station (11) has a second part (13) of the transceiver apparatus (3, 7, 13, 17) and a signal processor (15) which is connected to the second part (13) of the transceiver apparatus (3, 7, 13, 17) and has the purpose of generating the digital signals by coding the same from the transmission data and of acquiring the transmission data by decoding the digital signals.

7. System according to Claim 6, the data-processing user apparatus being a PC (21).

8. Use of a base station (1) for a cordless telephone for transmitting transmission data between an analog telephone link (25) and a data-processing user apparatus (21), the base station (1) being connected to the telephone link (25) and having a converter (5) for converting analog signals of the analog telephone link into digital signals, and vice versa, a mobile station (11) which has a radio connection to the base station (1) via the radio interface (27) between the base station (1) and the cordless telephone being connected to the user apparatus (21), **characterized in that**
- the base station (1) has a first part (3) of a transceiver apparatus (3, 7, 13, 17) for the radio transmission via the interface (27) and a converter (5) for converting analog signals which correspond to the transmission data and are received from the analog telephone link (25) into digital signals, and for converting digital signals which correspond to the transmission data into analog signals which are output to the telephone link (25), which converter (5) is the one which is also provided for converting telephone signals for their transmission via the radio interface (27) to the cordless telephone, and
- the mobile station (11) has a second part (13) of the transceiver apparatus (3, 7, 13, 17) and a signal processor (15) which is connected to the second part (13) of the transceiver apparatus (3, 7, 13, 17) and has the purpose of generating the digital signals by coding the same from the transmission data and of acquiring the transmission data by decoding the digital signals.

9. Use according to Claim 8, the converter (5) of the base station (1), said converter (5) converting the signals, sampling, with a sampling rate of more than 8 kHz, in particular approximately 16 kHz, the signals received from the analog telephone link (25) and converting them into the digital signals.

## Revendications

1. Procédé de transmission de données de transmission entre une jonction téléphonique analogique (25) et un dispositif d'abonné de traitement de données (21) par l'intermédiaire d'une station de base (1) qui est en liaison avec la jonction téléphonique (25) et qui est destiné à un téléphone sans fil, d'une station mobile (11) couplée au dispositif d'abonné (21) et de l'interface hertzienne du téléphone sans fil qui est utilisée entre la station de base (1) et la station mobile (11), **caractérisé par** les étapes comportant le fait de :
- recevoir des signaux analogiques, correspondant aux données de transmission, de la jonction téléphonique analogique (25) ;
- convertir les signaux analogiques en signaux numériques au moyen d'un convertisseur (5) qui est prévu dans la station de base (1) et qui est également destiné à la conversion de signaux téléphonique pour leur transmission au téléphone sans fil par l'intermédiaire de l'interface hertzienne (27) ;
- transmettre les signaux numériques par l'intermédiaire de l'interface hertzienne (27) ; et
- décoder les signaux numériques au moyen d'un processeur de signal (15) dans la station mobile (11) de façon à obtenir les données de transmission ; ainsi que
par les étapes opposées pour la transmission, lesquelles comportent le fait de :
- générer des signaux de numériques codés à partir des données de transmission au moyen du processeur de signal (15);
- transmettre les signaux numériques par l'intermédiaire de l'interface hertzienne (27) ;
- convertir les signaux numériques en signaux analogiques au moyen du convertisseur (5) ; et
- délivrer les signaux analogiques à la jonction téléphonique analogique (25).

2. Procédé selon la revendication 1, dans lequel le dispositif d'abonné de traitement de données est un PC (21).

3. Procédé selon la revendication 1 ou 2, dans lequel les signaux sont transmis par l'intermédiaire de l'interface hertzienne (27) conformément à un procédé duplex TDMA et dans lequel on utilise pour la transmission hertzienne des signaux, dans un sens comme dans le sens opposé, plusieurs fenêtres temporelles d'un cadre TDMA.

4. Procédé selon l'une des revendications précédentes, dans lequel les signaux numériques sont transmis par l'intermédiaire de l'interface hertzienne (27) conformément à un procédure duplex TDMA et dans lequel des fenêtres temporelles et/ou groupes de fenêtres temporelles successives d'un cadre TDMA sont utilisés alternativement pour la transmission hertzienne des signaux dans un sens et des signaux dans le sens opposé.

5. Procédé selon l'une des revendications précédentes, dans lequel la transmission hertzienne des signaux numériques est effectuée selon la norme DECT (Digital Enhanced Cordless Telecommunication) et dans lequel au moins une partie des fenêtres temporelles sont cependant rassemblées en un ou plusieurs groupes de fenêtres temporelles successives.

6. Système de transmission de données de transmission entre une jonction téléphonique analogique (25) et un dispositif d'abonné de traitement de données (21), lequel système comporte une station de base (1) d'un téléphone sans fil qui est en liaison avec la jonction téléphonique (25) et une station mobile (11) qui est en liaison hertzienne avec la station de base (1) par l'intermédiaire de l'interface hertzienne (27) entre la station de base (1) et le téléphone sans fil, laquelle station mobile est reliée au dispositif d'abonné (21),
**caractérisé en ce que**
la station de base (1) comporte une première partie (3) d'un dispositif d'émission et de réception (3, 7, 13, 17) pour la transmission hertzienne par l'intermédiaire de l'interface hertzienne (27) et un convertisseur (5) destiné à convertir des signaux analogiques, qui correspondent aux données de transmission et qui sont reçues par la jonction téléphonique analogique (25), en signaux numériques et à convertir des signaux numériques correspondant aux données de transmission en signaux analogiques qui sont délivrés à la jonction téléphonique (25), lequel convertisseur (5) est le convertisseur qui est également prévu pour la conversion de signaux téléphoniques pour leur transmission au téléphone sans fil par l'intermédiaire de l'interface hertzienne (27), et
la station mobile (11) comporte une deuxième partie (13) du dispositif d'émission et de réception (3, 7, 13, 17) et un processeur de signal (15) qui est relié à la deuxième partie (13) du dispositif d'émission et de réception (3, 7, 13, 17) et qui est destiné à générer les signaux numériques en codant les signaux numériques à partir des données de transmission et à obtenir les données de transmission en décodant les signes numériques.

7. Système selon la revendication 6, dans lequel le dispositif d'abonné de traitement de données est un PC (21).

8. Utilisation d'une station de base (1) d'un téléphone sans fil pour la transmission de données de transmission entre une jonction téléphonique analogique (25) et un dispositif d'abonné de traitement de données (21), la station de base (1) étant en liaison avec la jonction téléphonique (25) et comportant un convertisseur (5) destiné à convertir des signaux analogiques de la jonction téléphonique analogique en signaux numériques et inversement, une station mobile (11) en liaison hertzienne avec la station (1) de base par l'intermédiaire de l'interface hertzienne (27) entre la station (1) de base et le téléphone sans fil étant reliée au dispositif d'abonné (21),
**caractérisée en ce qu'**elle
la station de base (1) comporte une première partie (3) d'un dispositif d'émission et de réception (3, 7, 13, 17) pour la transmission hertzienne par l'intermédiaire de l'interface hertzienne (27) et un convertisseur (5) destiné à convertir des signaux analogiques, qui correspondent aux données de transmission et qui sont reçues par la jonction téléphonique analogique (25), en signaux numériques et à convertir des signaux numériques correspondant aux données de transmission en signaux analogiques qui sont délivrés à la jonction téléphonique (25), lequel convertisseur (5) est le convertisseur qui est également prévu pour la conversion de signaux téléphoniques pour leur transmission au téléphone sans fil par l'intermédiaire de l'interface hertzienne (27), et
la station mobile (11) comporte une deuxième partie (13) du dispositif d'émission et de réception (3, 7, 13, 17) et un processeur de signal (15) qui est relié à la deuxième partie (13) du dispositif d'émission et de réception (3, 7, 13, 17) et qui est destiné à générer les signaux numériques en codant ces derniers à partir des données de transmission et à obtenir les données de transmission en décodant les signes numériques.

9. Utilisation selon la revendication 8, dans laquelle le convertisseur (5) de la station de base (1), permettant de convertir les signaux, analyse les signaux reçus par la jonction téléphonique analogique (25) à une fréquence d'analyse de plus de 8 kHz, en particulier d'environ 16 kHz, et les convertit en les signaux numériques.
